# EUROPÄISCHE PATENTANMELDUNG

(11) **EP 2 031 355 A2**
(43) Veröffentlichungstag der Anmeldung: **04.03.2009**
(21) Anmeldenummer: 08105127.8
(22) Anmeldetag: 26.08.2008
(51) Int. Cl.: G01D 11/00, G01D 21/00, B62D 15/02

(54) **Verfahren zum Herstellen einer Sensoranordnung, Sensoranordnung und Lenkwinkelsensoranordnung**

(30) Priorität: 29.08.2007 DE 102007040831
(71) Anmelder: Continental Automotive GmbH, 30165 Hannover (DE)
(72) Erfinder: Ehret, Juergen, 69469, Weinheim (DE)

(57) **Zusammenfassung**

Verfahren zum Herstellen einer Sensoranordnung (10), bei dem in einem ersten Schritt eine Leiterplatte (16), die einen Sensor (12) aufweist, mit einem Leiterplattenträger (14) unter Ausbildung einer Sensorbaugruppe (20) mechanisch starr gekoppelt wird, in einem zweiten Schritt die Sensorbaugruppe (20) gegenüber einem Basiselement (30) in einer vorgegebenen Position ausgerichtet wird, und in einem dritten Schritt der Leiterplattenträger (14) der Sensorbaugruppe (20) mit dem Basiselement (30) unter Einhaltung einer vorgegebenen maximalen Toleranz der Position des Sensors (12) gegenüber dem Basiselement (30) mechanisch starr gekoppelt wird. Sensoranordnung (10) mit einer Sensorbaugruppe (20), die aufweist eine Leiterplatte (16) mit einem Sensor (12) und einen Leiterplattenträger (14), und einem Basiselement (30), wobei der Leiterplattenträger (14) unter Einhaltung einer vorgegebenen maximalen Toleranz einer lateralen Position des Sensors (12) gegenüber dem Basiselement (30) von 0,6 mm mit dem Basiselement (30) starr gekoppelt ist. Lenkwinkelsensoranordnung mit einer Sensoranordnung (10), wobei die Lenkwinkelsensoranordnung ein Lenkrad mit einer Drehachse (A) und einen Lenkwinkelsensor aufweist, und das Lenkrad das Basiselement (30) und der Lenkwinkelsensor die Sensorbaugruppe (20) mit dem Sensor (12) aufweist, und der Sensor (12) unter Einhaltung einer vorgegebenen maximalen Toleranz der Position des Sensors (12) gegenüber dem Basiselement (30) in einer radialen Richtung (R) bezüglich der Drehachse (A) des Lenkrads von 0,6 mm starr mit dem Basiselement (30) gekoppelt ist.

## Beschreibung

Die Erfindung betrifft ein Verfahren zum Herstellen einer Sensoranordnung, eine Sensoranordnung und eine Lenkwinkelsensoranordnung.

Der Lenkwinkel eines Lenkrads eines Fahrzeugs muss sehr exakt und fehlerfrei erfasst werden. Dies gilt insbesondere zur Regelung der Fahrzeugdynamik, insbesondere zur Regelung des Gierwinkels in ESP-Programmen.

Es ist Aufgabe der Erfindung, ein einfaches und kostengünstiges Verfahren zum Herstellen einer Sensoranordnung zu schaffen. Weiter ist es Aufgabe der Erfindung, eine Sensoranordnung und eine Lenkwinkelwinkelsensoranordnung zu schaffen, die präzise funktionieren.

Die Aufgabe wird gelöst durch die Merkmale der unabhängigen Ansprüche. Vorteilhafte Ausgestaltungen der Erfindung sind in den Unteransprüchen angegeben.

Die Erfindung zeichnet sich gemäß eines ersten Aspekts aus durch ein Verfahren zum Herstellen einer Sensoranordnung, bei dem in einem ersten Schritt eine Leiterplatte, die einen Sensor aufweist, mit einem Leiterplattenträger unter Ausbildung einer Sensorbaugruppe mechanisch starr gekoppelt wird, in einem zweiten Schritt die Sensorbaugruppe gegenüber einem Basiselement in einer vorgegebenen Position ausgerichtet wird, und in einem dritten Schritt der Leiterplattenträger der Sensorbaugruppe mit dem Basiselement unter Einhaltung einer vorgegebenen maximalen Toleranz der Position des Sensors gegenüber dem Basiselement mechanisch starr gekoppelt wird.

Dies hat den Vorteil, dass eine Positionierung der Sensorbaugruppe relativ zum Basiselement mit einer sehr kleinen Toleranz möglich ist.

In einer vorteilhaften Ausgestaltung des ersten Aspekts der Erfindung wird in dem zweiten Schritt die Sensorbaugruppe gegenüber dem Basiselement in einer vorgegebenen lateralen Position ausgerichtet, und in dem dritten Schritt der Leiterplattenträger mit dem Basiselement unter Einhaltung der vorgegebenen maximalen Toleranz der lateralen Position des Sensors gegenüber dem Basiselement mechanisch starr gekoppelt. Dies hat den Vorteil, dass die Positionierung der Sensorbaugruppe relativ zu dem Basiselement in einer Ebene des Basiselements mit einer sehr kleinen Toleranz erfolgen kann.

In einer weiteren vorteilhaften Ausgestaltung des ersten Aspekts der Erfindung wird der Leiterplattenträger mittels Laserschweißen mechanisch starr mit dem Basiselement gekoppelt. Laserschweißen stellt ein Schweißverfahren dar, durch das der Leiterplattenträger unter Einwirkung sehr kleiner Kräfte mit dem Basiselement verbunden werden kann. Damit ist eine Positionierung der Sensorbaugruppe relativ zum Basiselement mit einer sehr kleinen Toleranz möglich. Durch Laserschweißen können sowohl Leiterplattenträger aus Kunststoff als auch aus Metall mit dem Basiselement verschweißt werden.

In einer weiteren vorteilhaften Ausgestaltung des ersten Aspekts der Erfindung wird die Leiterplatte mit dem Leiterplattenträger durch Verkleben gekoppelt. Dies ermöglicht, die Leiterplatte einfach mit einem Leiterplattenträger aus Metall oder Kunststoff zu koppeln.

In einer weiteren vorteilhaften Ausgestaltung des ersten Aspekts der Erfindung wird der Leiterplattenträger durch Spritzgießen hergestellt und die Leiterplatte während des Spritzgießens des Leiterplattenträgers formschlüssig mit dem Leiterplattenträger gekoppelt. Damit kann die Leiterplatte einfach mit einem Leiterplattenträger aus Kunststoff gekoppelt werden.

In einer weiteren vorteilhaften Ausgestaltung des ersten Aspekts der Erfindung wird die Leiterplatte mit dem Leiterplattenträger durch Heißverstemmen gekoppelt. Dies trägt dazu bei, dass die Leiterplatte einfach mit einem Leiterplattenträger aus Kunststoff gekoppelt werden kann.

Die Erfindung zeichnet sich gemäß eines zweiten Aspekts aus durch eine Sensoranordnung mit einer Sensorbaugruppe, die aufweist eine Leiterplatte mit einem Sensor, und einen Leiterplattenträger, der mit der Leiterplatte mechanisch starr gekoppelt ist und der aus einem Material besteht, das Kupfer aufweist, und einem Basiselement, wobei der Leiterplattenträger unter Einhaltung einer vorgegebenen maximalen Toleranz einer lateralen Position des Sensors gegenüber dem Basiselement von 0,6 mm mit dem Basiselement mechanisch starr gekoppelt ist. Dies hat den Vorteil, dass der Leiterplattenträger durch Laserschweißen mit dem Basiselement mechanisch starr gekoppelt werden kann. Damit ist eine besonders genaue Positionierung der Sensorbaugruppe auf dem Basiselement möglich. Des Weiteren ermöglicht Kupfer eine gute Wärmeleitung in dem Leiterplattenträger und damit von der Sensorbaugruppe über den Leiterplattenträger auf das Basiselement.

Die Erfindung zeichnet sich gemäß eines dritten Aspekts aus durch eine Sensoranordnung mit einer Sensorbaugruppe, die aufweist eine Leiterplatte mit einem Sensor, und einen Leiterplattenträger, der mit der Leiterplatte mechanisch starr gekoppelt ist und der als Kunststoffspritzgussteil ausgebildet ist, und einem Basiselement, wobei der Leiterplattenträger unter Einhaltung einer vorgegebenen maximalen Toleranz einer lateralen Position des Sensors gegenüber dem Basiselement von 0,6 mm mit dem Basiselement mechanisch starr gekoppelt ist. Dies hat den Vorteil, dass der Leiterplattenträger durch Kunststofflaserschweißen mit dem Basiselement mechanisch starr gekoppelt werden kann. Damit ist eine besonders genaue Positionierung der Sensorbaugruppe auf dem Basiselement möglich. Außerdem ist eine kostengünstige Ausführung des Leiterplattenträgers möglich.

In einer vorteilhaften Ausgestaltung des zweiten und dritten Aspekts der Erfindung weist der Leiterplattenträger einen Randbereich auf, der so ausgebildet und angeordnet ist, dass der Leiterplattenträger lediglich in dem Randbereich mit dem Basiselement gekoppelt ist. Dies trägt dazu bei, dass die Kontaktflächen zwischen der Sensoranordnung und dem Basiselement klein ausgebildet sein können. Es ist möglich, die durch das Koppeln des Leiterplattenträgers mit dem Basiselement bedingte mechanische Einwirkung auf die Sensorbaugruppe gering zu halten. Damit ist eine besonders genaue Positionierung der Sensorbaugruppe auf dem Basiselement möglich.

In einer weiteren vorteilhaften Ausgestaltung des zweiten und dritten Aspekts der Erfindung weist die Leiterplatte eine Ausnehmung auf, und der Leiterplattenträger weist einen mit der Ausnehmung korrespondierenden Vorsprung auf, der formschlüssig in der Ausnehmung der Leiterplatte angeordnet ist. Damit ist es möglich, den Leiterplattenträger und die Sensorbaugruppe in einfacher Weise starr miteinander zu koppeln.

Die Erfindung zeichnet sich gemäß eines vierten Aspekts aus durch eine Lenkwinkelsensoranordnung mit einer Sensoranordnung gemäß des zweiten oder dritten Aspekts der Erfindung, wobei die Lenkwinkelsensoranordnung ein Lenkrad mit einer Drehachse und einen Lenkwinkelsensor aufweist, und das Lenkrad das Basiselement und der Lenkwinkelsensor die Sensorbaugruppe mit dem Sensor aufweist, und der Sensor unter Einhaltung einer vorgegebenen maximalen Toleranz der Position des Sensors gegenüber dem Basiselement in einer radialen Richtung bezüglich der Drehachse des Lenkrads von 0,6 mm mechanisch starr mit dem Basiselement gekoppelt ist. Dies hat den Vorteil, dass eine sehr genaue Positionierung des Sensors und damit eine sehr genaue Bestimmung des Lenkwinkels des Lenkrads möglich ist.

Die Erfindung ist im Folgenden anhand von schematischen Zeichnungen näher erläutert. Es zeigen:
- Figur 1: eine Sensoranordnung,
- Figur 2: eine Sensorbaugruppe der Sensoranordnung in einer ersten Ausführungsform,
- Figur 3: eine Sensorbaugruppe der Sensoranordnung in einer zweiten Ausführungsform, und
- Figur 4: eine Sensorbaugruppe der Sensoranordnung in einer dritten Ausführungsform.

Elemente gleicher Konstruktion oder Funktion sind figuren-übergreifend mit den gleichen Bezugszeichen gekennzeichnet.

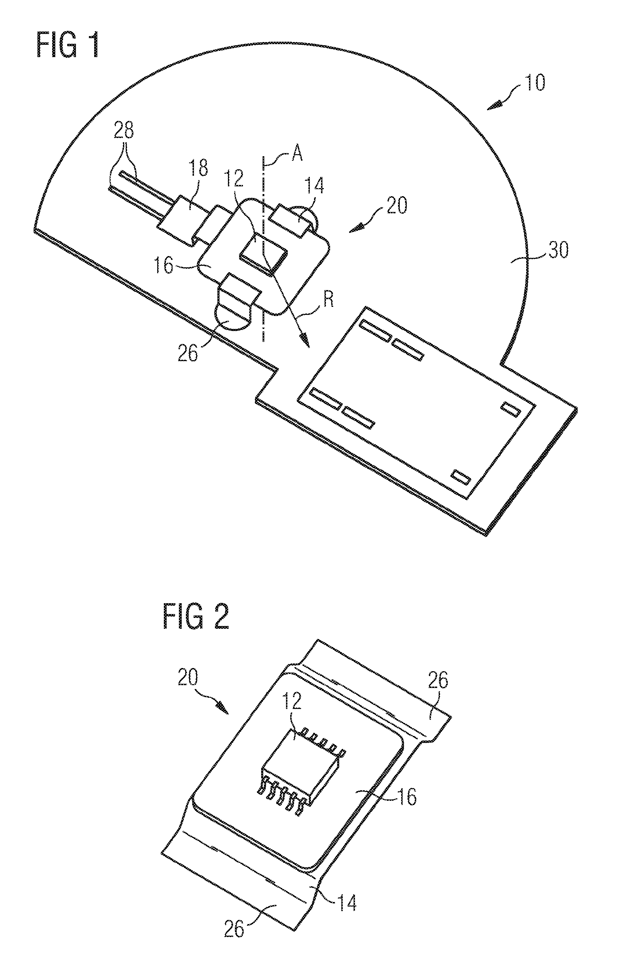

Figur 1 zeigt eine Sensoranordnung 10 mit einem Basiselement 30, auf dem eine Sensorbaugruppe 20 angeordnet ist. Die Sensoranordnung 10 ist bevorzugt Teil einer Lenkwinkelsensoranordnung, wobei die Lenkwinkelsensoranordnung ein Lenkrad mit einer Drehachse A und einen Lenkwinkelsensor aufweist. Der Lenkwinkelsensor weist bevorzugt die Sensorbaugruppe 20 mit einem Sensor 12 auf. Das Basiselement 30 ist vorzugsweise Teil einer Lenkvorrichtung mit der Lenkwinkelsensoranordnung.

In den Figuren 2 bis 4 sind verschiedene Ausführungsformen der Sensorbaugruppe 20 dargestellt. Die Sensorbaugruppe 20 umfasst eine Leiterplatte 16, auf welcher der Sensor 12 angeordnet ist. Der Sensor 12 ist mit der Leiterplatte 16 elektrisch gekoppelt. Die Leiterplatte 16 ist mechanisch starr mit einem Leiterplattenträger 14 gekoppelt. Der Leiterplattenträger 14 weist einen Randbereich 26 auf. Der Leiterplattenträger 14 ist bevorzugt in dem Randbereich 26 mit dem Basiselement 30 gekoppelt und in weiteren Bereichen von dem Basiselement 30 beabstandet. Der Leiterplattenträger 14 kann jedoch auch in weiteren Bereichen mit dem Basiselement 30 gekoppelt sein. In weiteren Ausführungsformen kann der Leiterplattenträger 14 in anderen Bereichen mit dem Basiselement 30 gekoppelt sein.

In Figur 2 ist die Leiterplatte 16 mit dem Sensor 12 auf dem Leiterplattenträger 14 angeordnet, der als Metallbiegeteil ausgebildet ist. Der Leiterplattenträger 14 ist vorzugsweise aus einem Metall gebildet, das Kupfer aufweist. Besonders bevorzugt ist, wenn der Leiterplattenträger 14 als einstückiges Kupferteil, insbesondere als dünnes Kupferblech, ausgebildet ist. Der Leiterplattenträger 14 kann auch aus einem Kunststoff gebildet sein. Die Kopplung zwischen dem Leiterplattenträger 14 und der Leiterplatte 16 erfolgt vorzugsweise mittels einer Klebung. Ist der Leiterplattenträger 14 aus einem Metall gebildet, so ist eine besonders gute Wärmeleitung von dem Sensor 12 über die Leiterplatte 16 und den Leiterplattenträger 14 zu dem Basiselement 30 ermöglicht.

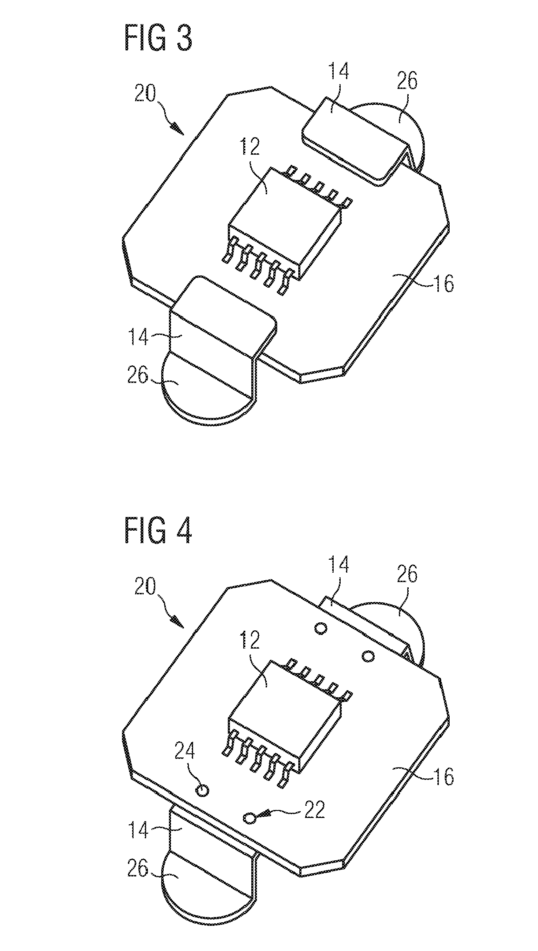

Figur 3 zeigt die Sensorbaugruppe 20 mit dem Leiterplattenträger 14, der als ein Kunststoffspritzgussteil ausgebildet ist. Damit ist eine besonders kostengünstige Ausführung des Leiterplattenträgers 14 erreichbar.

Ist der Leiterplattenträger 14 als Kunststoffspritzgussteil ausgebildet, so ist der Kunststoff bevorzugt ein laserabsorbierender Kunststoff ist. Mit einem derartigen Material kann ein zuverlässiges Laserschweißen des Leiterplattenträgers 14 auf das Basiselement 30 ermöglicht werden. Ein derartiger laserabsorbierender Kunststoff ist vorzugsweise PBT (Polybutylenterephthalat), das den Vorteil hat, dass es eine hohe Maßbeständigkeit aufweist.

In Figur 4 ist eine Sensorbaugruppe 20 in einer weiteren Ausführungsform der Sensoranordnung 10 gezeigt, bei welcher der Leiterplattenträger 14 aus Kunststoffspritzgussteilen ausgebildet ist. Der Leiterplattenträger 14 weist Vorsprünge 24 auf, die Leiterplatte 16 hat Ausnehmungen 22. Die Vorsprünge 24 greifen in die entsprechenden Ausnehmungen 22 der Leiterplatte 16 ein. Die Vorsprünge 24 sind jeweils formschlüssig in den Ausnehmungen 22 der Leiterplatte 16 angeordnet. Auf diese Weise können der Leiterplattenträger 14 und die Sensorbaugruppe 20 sehr einfach starr miteinander gekoppelt sein.

Wie in Figur 1 dargestellt, sind auf dem Basiselement 30 weiter Leiterbahnen 28 angeordnet, die mit der Sensorbaugruppe 20 mittels eines Flachbandkabels 18 elektrisch gekoppelt sind. So kann eine elektrische Kopplung der Sensorbaugruppe 20 über das Basiselement 30 mit einer nicht dargestellten Auswerte- und Steuereinheit ermöglicht werden.

Im Folgenden soll das Verfahren zum Herstellen der Sensoranordnung 10 beschrieben werden:

Zunächst wird in einem ersten Schritt die Leiterplatte 16, die den Sensor 12 aufweist, mit dem Leiterplattenträger 14 mechanisch starr gekoppelt.

Die Leiterplatte 16 wird vorzugsweise durch Verkleben mit dem Leiterplattenträger 14 starr gekoppelt. Ein Verkleben ermöglicht es, dass der Leiterplattenträger 14 entweder aus einem Metall oder aus einem Kunststoff ausgebildet ist oder ein Metall oder einen Kunststoff aufweist.

Bevorzugt ist, wenn der Leiterplattenträger 14 durch Spritzgießen eines Kunststoffs hergestellt wird und die Leiterplatte 16 während des Spritzgießens des Leiterplattenträgers 14 formschlüssig mit dem Leiterplattenträger 14 gekoppelt wird.

In einer bevorzugten Ausführungsform des Verfahrens werden die Leiterplatte 16 mit den Ausnehmungen 22 und der Leiterplattenträger 14 mit den Vorsprüngen 24 hergestellt. Sind die Vorsprünge 24 des Leiterplattenträgers 14 aus einem Kunststoff gebildet, so können die Vorsprünge 24 in die Ausnehmungen 22 der Leiterplatte 16 eingesetzt werden und anschließend durch Heißverstemmen eine starre Kopplung zwischen der Leiterplatte 16 und dem Leiterplattenträger 14 erreicht werden.

Durch das mechanisch starre Koppeln der Leiterplatte 16 mit dem Leiterplattenträger 14 wird die Sensorbaugruppe 20 ausgebildet.

In einem weiteren Schritt wird die Sensorbaugruppe gegenüber dem Basiselement 30 in einer vorgegebenen lateralen Position ausgerichtet. Dies wird vorzugsweise mit Hilfe eines optischen Bilderkennungsverfahrens realisiert.

In einem weiteren Schritt wird der oder werden die Leiterplattenträger 14 der Sensorbaugruppe 20 mittels Laserschweißen mit dem Basiselement 30 mechanisch starr gekoppelt. Laserschweißen hat den Vorteil, dass die Kopplung des Leiterplattenträgers mit dem Basiselement 30 durchgeführt werden kann, ohne dass größere Kräfte auf die Sensorbaugruppe 20 einwirken, die zu einer Verschiebung der Sensorbaugruppe 20 gegenüber dem Basiselement 30 führen könnten. Damit ist es möglich, die Sensorbaugruppe 20 sehr genau relativ zu dem Basiselement zu positionieren. Laserschweißen hat weiter den Vorteil, dass der Leiterplattenträger 14, der bevorzugt aus einem Material besteht, das ein Metall und/oder einen Kunststoff aufweist, mit dem Basiselement 30 gekoppelt werden kann. Für den Fall, dass das Material des Leiterplattenträgers 14 einen Kunststoff aufweist, kann das Koppeln des Leiterplattenträgers 14 mit dem Basiselement 30 mittels Kunststofflaserschweißen erfolgen.

Die Kopplung des Leiterplattenträgers 14 mit dem Basiselement 30 kann auch mittels eines anderen Kopplungsverfahrens, insbesondere eines Verfahrens zur stoffschlüssigen Kopplung, erfolgen, soweit dieses dazu geeignet ist, dass vermieden werden kann, dass größere Kräfte auf die Sensorbaugruppe 20 einwirken, die zu einer Verschiebung der Sensorbaugruppe 20 gegenüber dem Basiselement 30 führen könnten.

Hat der Leiterplattenträger 14 einen Randbereich 26, der zur Kopplung mit dem Basiselement 30 ausgebildet ist, so kann durch die kleinen Kontaktflächen des Randbereichs 26 erreicht werden, dass während der Kopplung des Leiterplattenträgers 14 mit dem Basiselement 30 nur eine geringe mechanische Einwirkung auf die Sensorbaugruppe 20 erfolgt.

Durch die geringe mechanische Einwirkung auf die Sensorbaugruppe 20 durch die Kopplung des Leiterplattenträgers 14 mit dem Basiselement 30 ist es möglich, dass die Sensorbaugruppe 20 besonders genau relativ zu dem Basiselement 30 gekoppelt ist. Es kann so eine vorgegebene maximale Toleranz von 0,6 mm der lateralen Position des Sensors 12 gegenüber dem Basiselement 30 erreicht werden.

Ist die Sensoranordnung 10 Teil einer Lenkwinkelsensoranordnung, wobei die Lenkwinkelsensoranordnung ein Lenkrad mit einer Drehachse und einem Lenkwinkelsensor aufweist, ist es mit Hilfe des vorgestellten Verfahrens möglich, dass der Sensor 12 gegenüber dem Basiselement 30 in einer radialen Richtung R bezüglich der Drehachse A des Lenkrads eine vorgegebene maximale Toleranz der Position von 0,6 mm hat. Es ist so möglich, eine sehr präzise arbeitende Messanordnung zur Bestimmung des Lenkwinkels des Lenkrads zu erhalten.

## Patentansprüche

1. Verfahren zum Herstellen einer Sensoranordnung (10), bei dem
- in einem ersten Schritt eine Leiterplatte (16), die einen Sensor (12) aufweist, mit einem Leiterplattenträger (14) unter Ausbildung einer Sensorbaugruppe (20) mechanisch starr gekoppelt wird,
- in einem zweiten Schritt die Sensorbaugruppe (20) gegenüber einem Basiselement (30) in einer vorgegebenen Position ausgerichtet wird, und
- in einem dritten Schritt der Leiterplattenträger (14) der Sensorbaugruppe (20) mit dem Basiselement (30) unter Einhaltung einer vorgegebenen maximalen Toleranz der Position des Sensors (12) gegenüber dem Basiselement (30) mechanisch starr gekoppelt wird.

2. Verfahren nach Anspruch 1, bei dem in dem zweiten Schritt die Sensorbaugruppe (20) gegenüber dem Basiselement (30) in einer vorgegebenen lateralen Position ausgerichtet wird, und in dem dritten Schritt der Leiterplattenträger (14) mit dem Basiselement (30) unter Einhaltung der vorgegebenen maximalen Toleranz der lateralen Position des Sensors (12) gegenüber dem Basiselement (30) mechanisch starr gekoppelt wird.

3. Verfahren nach Anspruch 1 oder 2, bei dem der Leiterplattenträger (14) mittels Laserschweißen mechanisch starr mit dem Basiselement (30) gekoppelt wird.

4. Verfahren nach einem der vorhergehenden Ansprüche, bei dem die Leiterplatte (16) durch Verkleben mit dem Leiterplattenträger (14) gekoppelt wird.

5. Verfahren nach einem der Ansprüche 1 bis 3, bei dem der Leiterplattenträger (14) durch Spritzgießen hergestellt wird und die Leiterplatte (16) während des Spritzgießens des Leiterplattenträgers (14) formschlüssig mit dem Leiterplattenträger (14) gekoppelt wird.

6. Verfahren nach einem der Ansprüche 1 bis 3, bei dem die Leiterplatte (16) mit dem Leiterplattenträger (14) durch Heißverstemmen gekoppelt wird.

7. Sensoranordnung (10) mit einer
- Sensorbaugruppe (20), die aufweist
- eine Leiterplatte (16) mit einem Sensor (12), und
- einen Leiterplattenträger (14), der mit der Leiterplatte (16) mechanisch starr gekoppelt ist und der aus einem Material besteht, das Kupfer aufweist,
- und einem Basiselement (30), wobei der Leiterplattenträger (14) unter Einhaltung einer vorgegebenen maximalen Toleranz einer lateralen Position des Sensors (12) gegenüber dem Basiselement (30) von 0,6 mm mit dem Basiselement (30) mechanisch starr gekoppelt ist.

8. Sensoranordnung (10) mit einer
- Sensorbaugruppe (20), die aufweist
- eine Leiterplatte (16) mit einem Sensor (12), und
- einen Leiterplattenträger (14), der mit der Leiterplatte (16) mechanisch starr gekoppelt ist und der als Kunststoffspritzgussteil ausgebildet ist,
- und einem Basiselement (30), wobei der Leiterplattenträger (14) unter Einhaltung einer vorgegebenen maximalen Toleranz einer lateralen Position des Sensors (12) gegenüber dem Basiselement (30) von 0,6 mm mit dem Basiselement (30) mechanisch starr gekoppelt ist.

9. Sensoranordnung (10) nach Anspruch 7 oder 8, wobei der Leiterplattenträger (14) einen Randbereich (26) aufweist, der so ausgebildet und angeordnet ist, dass der Leiterplattenträger (14) lediglich in dem Randbereich (26) mit dem Basiselement (30) gekoppelt ist.

10. Sensoranordnung (10) nach einem der Ansprüche 7 bis 9, wobei die Leiterplatte (16) eine Ausnehmung (22) aufweist, und der Leiterplattenträger (14) einen mit der Ausnehmung (22) korrespondierenden Vorsprung (24) aufweist, der formschlüssig in der Ausnehmung (22) der Leiterplatte (16) angeordnet ist.

11. Lenkwinkelsensoranordnung mit einer Sensoranordnung (10) nach einem der Ansprüche 7 bis 10, wobei die Lenkwinkelsensoranordnung ein Lenkrad mit einer Drehachse (A) und einen Lenkwinkelsensor aufweist, und das Lenkrad das Basiselement (30) und der Lenkwinkelsensor die Sensorbaugruppe (20) mit dem Sensor (12) aufweist, und der Sensor (12) unter Einhaltung einer vorgegebenen maximalen Toleranz der Position des Sensors (12) gegenüber dem Basiselement (30) in einer radialen Richtung (R) bezüglich der Drehachse (A) des Lenkrads von 0,6 mm mechanisch starr mit dem Basiselement (30) gekoppelt ist.
